# NEUE EUROPÄISCHE PATENTSCHRIFT

(11) **EP 0 878 338 B2**
(45) Veröffentlichungstag und Bekanntmachung des Hinweises auf die Entscheidung über den Einspruch: **10.07.2013**
(45) Hinweis auf die Patenterteilung: 15.06.2005
(21) Anmeldenummer: 98103877.1
(22) Anmeldetag: 05.03.1998
(51) Int. Cl.: B60J 7/057

(54) **Elektromotorischer Antrieb**
Electric motor drive
système d'entraînement à moteur électrique

(30) Priorität: 16.05.1997 DE 19720690
(43) Veröffentlichungstag der Anmeldung: 18.11.1998
(73) Patentinhaber: ROBERT BOSCH GMBH, 70442 Stuttgart (DE)
(72) Erfinder: Lamm, Hubert, 77876 Kappelrodeck (DE); Haderer, Guenter, 77815 Duehl (DE)

(56) Entgegenhaltungen:
- EP-A- 0 416 384
- EP-A2- 0 047 812
- EP-B1- 0 489 940
- DE-A1- 2 906 860
- DE-A1- 3 150 572
- DE-A1- 3 303 590
- DE-A1- 3 717 354
- DE-A1- 3 832 941
- DE-A1- 3 930 053
- DE-A1- 4 127 047
- DE-A1- 4 201 019
- DE-A1- 4 233 156
- DE-A1- 4 307 866
- DE-A1- 4 424 633
- DE-A1- 4 431 592
- DE-B4- 19 607 552
- DE-C1- 3 924 292
- DE-C1- 4 339 365
- DE-C1- 4 411 935
- DE-T2- 69 106 476
- US-A- 5 164 645
- US-A- 5 404 673

## Beschreibung

### Stand der Technik

Die Erfindung geht aus von einem elektromotorischen Antrieb zum Betreiben eines Kraftfahrzeug-Stellteils nach der Gattung des unabhängigen Anspruchs.

Elektromotorische Antriebe, die Stellteile beispielsweise in Kraftfahrzeugen nach Maßgabe von einer Bedienperson über eine Bedienvorrichtung abgegebener Stellbefehle zwischen Endlagen bewegen, sind allgemein bekannter Stand der Technik. Insbesondere sind elektrisch betätigbare Schiebedächer und -fenster bekannt, die mittels eines Kippschalters je nach Schalterstellung in Richtung einer ganz geöffneten und ganz geschlossenen Position bewegt werden können. Ferner sind elektromotorische Sitzverstellungen bekannt, die einen Fahrzeugsitz oder Teile davon zwischen Endlagen bewegen. Dabei kann es vorkommen, daß eine Bedienperson das Stellteil in eine bestimmte, ausgezeichnete Position bewegen will, die Position aber nicht exakt erreicht wird. Beispielsweise kann es sich dabei um die Schließstellung eines Kraftfahrzeug-Schiebedachs oder -Fensters oder auch um eine bestimmte Sitzposition eines Kraftfahrzeugsitzes handeln. Die Bedienperson muß daher mehrere Verstellvorgänge vornehmen, bis das Stellteil die gewünschte Position angenommen hat, oder aber das Stellteil bei der Positionierung genau beobachten.

Mit der vorliegenden Erfindung wird angestrebt, daß die Einnahme bestimmter ausgewählter Soll-Positionen als ausgezeichnete Positionen durch das Kraftfahrzeug-Stellteil ohne exakte Kontrolle der Position durch eine Bedienperson sichergestellt ist.

Mit der US 5 164 645 A ist ein elektromotorischer Antrieb im Kraftfahrzeug, beispielsweise zur Verstellung eines Lenkrads oder eines Sitzes bekannt geworden. Hierbei kann das bewegliche Teil automatisch in eine vorgegebene Position bewegt werden, wobei der Antriebsmotor abgeschaltet wird, sobald das Stellteil in eine zuvor definierte Motor-Abschalt-Zone eintritt. Aufgrund der veränderlichen Trägheit des Antriebmotors und/oder der Umgebungsbedingungen des Stellteils stoppt das Stellteil irgendwo in der Nähe der vorgegebenen Position. Da aber in der Motor-Abschalt-Zone keine Regelung oder Steuerung des Stellteils stattfindet, kann mit einer solchen Vorrichtung eine vorgegebene Position nicht exakt angefahren werden.

### Vorteile der Erfindung

Die Erfindung mit den Merkmalen des Hauptanspruchs hat den Vorteil, daß das Kraftfahrzeug-Stellteil die ausgezeichnete Position sicher einnimmt, sobald sich das Stellteil im festgelegten Bereich, im folgenden Fangbereich genannt, befindet. Der Fahrer wird nicht durch den Versuch, das Stellteil exakt zu positionieren, vom Straßenverkehr abgelenkt. Prinzipiell können auch mehrere ausgezeichnete Positionen für ein Stellteil definiert sein. Die Erfindung ist dann für jede einzeln anwendbar.

Der Antrieb bewegt das Kraftfahrzeug-Stellteil im Fangbereich dann selbsttätig in die ausgezeichnete Position, wenn keine Stellbefehle für das Stellteil vorliegen. Während der Bewegung des Stellteils aufgrund von Stellbefehlen, die beispielsweise von einer Bedienperson erteilt werden, ist der Fangmechanismus also außer Kraft. Das Stellteil kann somit ohne Ansprechen des Fangmechanismus durch den Fangbereich bewegt werden; bleibt es aber im Fangbereich stehen, bewegt der Antrieb das Stellteil in die ausgezeichnete Position.

Vorteilhaft ist die selbsttätige Bewegung des Kraftfahrzeug-Stellteils in die ausgezeichnete Position von der Bewegungsrichtung des Kraftfahrzeug-Stellteils vor Erreichen des Bereichs abhängig. Dies ermöglicht einer Bedienperson durch die Wahl der Bewegungsrichtung auch die Positionierung des Stellteils im Fangbereich oder aus dem Fangbereich heraus ohne nachfolgende selbsttätige Bewegung des Stellteils zurück in die ausgezeichnete Position (im folgenden Fangmechanismus genannt).

Eine Weiterbildung der Erfindung sieht vor, daß die ausgezeichnete Position eine Endlage des Kraftfahrzeug-Stellteils ist. Damit ist vorteilhaft sichergestellt, daß die Endlage korrekt eingenommen wird, auch wenn das Kraftfahrzeug-Stellteil lediglich in die Nähe der Endlage gebracht wurde. Es hat somit eine definierte Position in der Endlage.

Besonders vorteilhaft wirkt sich die Erfindung aus, wenn die Endlage die Schließstellung eines Kraftfahrzeug-Stellteils ist, das eine Öffnung freigibt oder verschließt. Beispielsweise besteht die Gefahr, daß ein Schiebedach als Stellteil eine Schließposition nicht exakt einnimmt, weil ein Kippschalter, über den ein Antrieb des Schiebedachs betätigt wird, zu früh losgelassen wurde. Durch Windabweiser oder Dichtungslippen an der Kante der Schiebedachöffnung ist für eine Bedienperson häufig nicht erkennbar, daß sich das Schiebedach noch nicht in der Schließstellung befindet und noch keine vollständige Schließ- und Dichtwirkung eintritt. Dadurch können Beschädigungen des Kraftfahrzeuginnenraums verursacht werden, die durch die erfindungsgemäße Vorrichtung vermieden werden.

Da das Kraftfahrzeug-Stellteil gegen Endlagen bewegbar ist, besteht die Gefahr, daß Körperteile eingeklemmt werden, wenn der Antrieb das Stellteil selbsttätig in die ausgezeichnete Position bewegt. Vorteilhaft ist der Fangbereich um die Position deshalb so gewählt, daß ein Einklemmen eines Körperteils ausgeschlossen ist. Ist die ausgezeichnete Position beispielsweise so festgelegt, daß das Kfz-Stellteil in der Position an einen Anschlag anstößt, darf der Fangbereich nicht größer als einige Millimeter sein, damit auch Körperteile von Kindern nicht eingeklemmt werden können.

In einer vorteilhaften Weiterbildung ist eine Vorrichtung vorgesehen, die den Antrieb außerhalb des Fangbereichs im Fall des Einklemmens von Körperteilen oder Gegenständen anhält oder reversiert und die Verstellung innerhalb des Fangbereichs zuläßt. Damit wird ein Einklemmen ausgeschlossen und gleichzeitig die Funktionalität des Fangmechanismus, also das Bewegen des Stellteils an eine festgelegte Position bei Erreichen des Fangbereichs, sichergestellt.

Eine besonders einfache Realisierungsmöglichkeit für die Erfindung ergibt sich, wenn der Antrieb wenigstens einen Drehzahlsensor aufweist. Die Position des Stellteils steht in Zusammenhang mit der Umdrehungszahl des Motors, so daß die ausgezeichnete Position und der Fangbereich in Abhängigkeit von der Zahl von Sensorimpulsen festgelegt werden kann. Denkbar ist allerdings auch, daß am Stellteil selbst Lagesensoren, beispielsweise in Form von Schleifpotentiometern, angeordnet sind.

Eine Weiterbildung der Erfindung sieht vor, daß die ausgezeichnete Position und/oder der ausgezeichnete Bereich einstellbar ist/sind. Dies ermöglicht einer Bedienperson die Anpassung Stellteilverhaltens an individuelle Bedürfnisse. Beispielsweise kann die Bedienperson unterschiedliche Fangbereiche einstellen, löschen oder ihre Größe ändern.

Es kann auch vorgesehen sein, daß die ausgezeichnete Position und/oder der ausgezeichnete Bereich erlernbar sind, sodaß beispielsweise eine Schließposition des Stellteils, die sich im laufenden Verstellbetrieb durch Verschleiß oder andere Einflüsse ändert, nachgestellt werden kann.

Die Erfindung ist bevorzugt einsetzbar bei Schiebe-Hebe-Dächern, wo die ausgezeichnete Position die Schließposition sein kann. Zur Realisierung der Schiebe- und Hebefunktion sind derartige Dächer häufig mit einer Kulissenführung ausgestattet, die eine lineare Verstellbewegung über eine Mechanik in eine Verschiebung bzw. ein Heben des Dachs umsetzt. Die ausgezeichnete Position kann so ausgewählt sein, daß sie der Schließstellung des Schiebe-Hebe-Dachs entspricht.

Weitere vorteilhafte Weiterbildungen und Ausgestaltungen der erfindungsgemäßen Vorrichtung ergeben sich aus den weiteren Unteransprüchen und in Verbindung mit der nachfolgenden Beschreibung.

### Zeichnung

In den Zeichnungen sind Ausführungsbeispiele der erfindungsgemäßen Vorrichtung dargestellt und in der nachfolgenden Beschreibung näher erläutert.

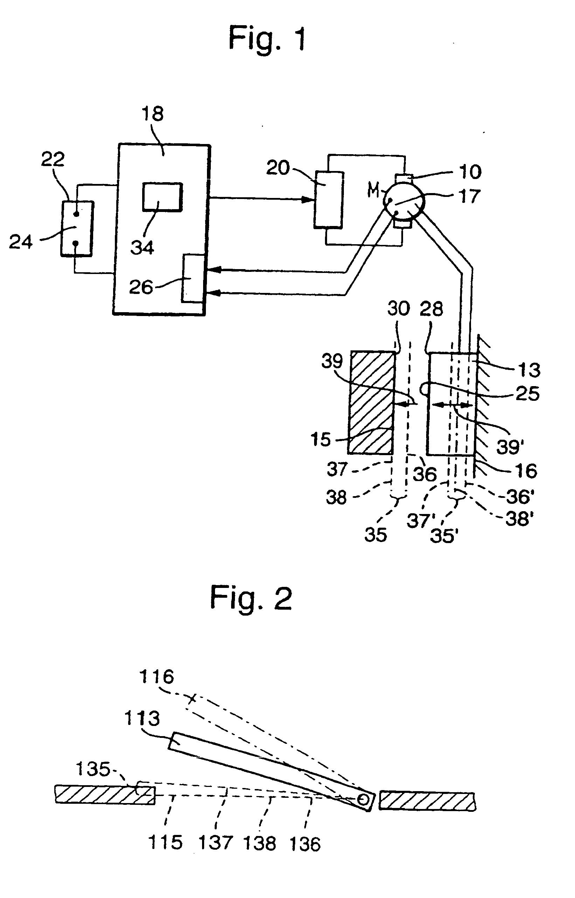

Es zeigen Figur 1 eine eine erfindungsgemäße Vorrichtung zum Verstellen eines Kraftfahrzeug-Schiebedachs, Figur 2 eine erfindungsgemäße Vorrichtung zum Verstellen eines Kraftfahrzeug-Hebedachs.

### Beschreibung des Ausführungsbeispiels

In der Figur 1 ist ein erstes Ausführungsbeispiel des erfindungsgemäßen elektromotorischen Antriebs dargestellt. Ein elektromotorischer Antrieb 10 bewegt ein Kraftfahrzeug-Stellteil 13 zwischen zwei Endlagen 15 und 16. Bei dem Stellteil handelt es sich um ein Kraftfahrzeug-Schiebedach. Der Antrieb 10 weist eine signalverarbeitende Anordnung 18 auf, die den Antrieb 10 über eine Motortreiberschaltung 20 regelt oder steuert. Eine Bedienvorrichtung 22 in Form eines um eine neutrale Mittelstellung in zwei Richtungen schaltbaren Kippschalters 24 überträgt Stellbefehle des Fahrzeugführers an die signalverarbeitende Anordnung 18. Die eine Schaltrichtung des Kippschalters löst eine Bewegung des Stellteils 13 in Richtung der Endlage 15 aus, die andere Schaltrichtung löst eine Bewegung in Richtung der Endlage 16 aus. In dem Elektromotor des Antriebs 10 sind zwei HallSensoren 17 angeordnet, die mit einem Magnetrad auf der Motorankerwelle als Drehsensoren zusammenwirken. Ihre Sensorsignale werden von der signalverarbeitenden Anordnung 18 über eine Schnittstelle 26 zur Bestimmung der Drehzahl, Drehrichtung und anderen Bewegungsgrößen des Elektromotors ausgewertet. Aus diesen Daten bestimmt die signalverarbeitende Anordnung 18 die gegenwärtige Position des Stellteils 13.

Der erfindungsgemäße elektromotorische Antrieb arbeitet folgendermaßen: Eine Bedienperson fordert eine Verstellung des Stellteils 13 über eine Betätigung des Kippschalters 24 an. Die signalverarbeitende Anordnung 18 setzt den Antrieb 10 über die Motortreiberschaltung 20 in Richtung einer der Endlagen 15 oder 16 in Bewegung. Die Richtung ist dabei durch die Stellung des Kippschalters 24 vorgegeben. Während der Bewegung des Stellteils 13 liest die signalverarbeitende Anordnung 18 die im Antrieb 10 generierten Hallsensorsignale über die Schnittstelle 26 ein und ermittelt aus den inkrementierten Hallsensorsignalen die gegenwärtige Position des Stellteils 13. Für das Stellteil 13 sind zwei ausgezeichnete Positionen 38, 38', die bestimmte Sollpositionen für das Stellteil 13 darstellen in Tabellen in einem Speicher 34 der signalverarbeitenden Anordnung 18 niedergelegt. Um die ausgezeichnete Position 38, 38' herum sind Fangbereiche 35, 35' in Form von unteren Grenzen 36, 36' und oberen Grenzen 37, 37' festgelegt und ebenfalls im Speicher 34 der signalverarbeitenden Anordnung 18 gespeichert. Zusätzlich sind zu den Bereichen Richtungsvorgaben 39, 39' im Speicher 34 in Form von Codes festgelegt. Die Codes repräsentieren eine Bewegung des Stellteils in Richtung der Endlage 15, in Richtung der Endlage 16, oder in beide Richtungen. Die Positionsangaben beziehen sich dabei auf einen Bezugspunkt 25 am Stellteil 13, der in diesem Ausführungsbeispiel auf der Vorderkante des Schiebedachs liegt. Befindet sich der Bezugspunkt 25 oberhalb der unteren Grenzen 36, 36' und unterhalb der jeweils zugehörigen oberen Grenzen 37, 37' eines der Fangbereiche 35 oder 35', so ist das Schiebedach im Fangbereich. Stellt die Bedienperson den Kippschalter 24 in seine Mittelstellung zurück, vergleicht die signalverarbeitende Anordnung 18 die aktuelle Position des Stellteils 13 mit den Fangbereichen 35, 35'.

Hat das Stellteil bei Beendigung der Betätigung des Kippschalters 24 einen der Fangbereiche 35, 35' erreicht und entsprach seine Bewegungsrichtung vor Beendigung der Betätigung der dem erreichten Bereich 35 oder 35' zugeordneten Richtungsvorgabe 39 bzw. 39', so steuert die signalverarbeitende Anordnung 18 den Antrieb 10 über die Motortreiberschaltung 20 selbsttätig so lange an, bis das Stellteil 13 die zu dem Bereich 35 bzw. 35' festgelegte Position 38 bzw. 38' angenommen hat. Erst dann wird der Antrieb und damit das Stellteil gestoppt. Diese Bewegung kann durch die Bedienperson nicht abgebrochen werden. Damit ist sichergestellt, daß die ausgezeichnete Position auf jeden Fall eingenommen wird. Es kann jedoch auch vorgesehen sein, daß die Bewegung beispielsweise durch einen separaten Betätigungsschalter oder durch eine langanhaltende Betätigung abgebrochen werden kann.

Eine der für das Stellteil 13 gespeicherten ausgezeichneten Positionen, die Position 38, ist die Schließstellung des Stellteils 13, in der die vordere Kante 28 des Stellteils 13 an den Anschlag 30 stößt. Die obere Grenze 37 des um die ausgezeichnete Position 38 festgelegten Bereichs 35 fällt mit der Position des Anschlags 30 zusammen. Der Abstand der unteren Grenze 36 von der oberen Grenze 37 ist so gewählt, daß der Antrieb 10 das Stellteil 13 mit einer halben Umdrehung des Abtriebsgliedes seines Getriebes durch den Bereich 35 bewegt. Der Bereich 35 ist unter Berücksichtigung der gegebenen mechanischen Verhältnisse damit so klein, daß ein Einklemmen eines Körperteils einer Person zwischen der vorderen Kante 28 des Stellteils 13 und dem Anschlag 30 bei der selbsttätigen Bewegung des Stellteils 13 durch die signalverarbeitende Anordnung 18 sicher ausgeschlossen werden kann. Andererseits ist durch die Festlegung der ausgezeichneten Position 38 sichergestellt, daß das Schiebedach die Schließstellung einnimmt, wenn es in der Nähe des Schließstellung nach einer Bewegung in Richtung des Anschlags 30 gestoppt wird. Beschädigungen des Fahrzeuginneren beispielsweise durch eindringendes Wasser werden vermieden. Außerhalb des festgelegten Bereichs 35 stoppt oder revertiert die signalverarbeitende Anordnung 18 den Stellantrieb 10 im Fall des Einklemmens von Körperteilen oder Gegenständen zwischen dem Stellteil 13 und dem Anschlag 30. Zur Ermittlung eines Einklemmfalls wertet die signalverarbeitende Anordnung 18 die Signale der Hallsensoren 17 im Antrieb 10 aus. Denkbar ist jedoch auch eine Auswertung des vom Elektromotor des Antriebs 10 aufgenommenen Stroms.

Die zweite ausgezeichnete Position 38' befindet sich in der Nähe der Belüftungsstellung des Stellteils 13, d.h. in einem Bereich, in dem das Schiebedach fast vollständig geöffnet ist. Die untere Grenze 36' und die obere Grenze 37' des der ausgezeichneten Position 38' zugeordneten Bereichs 35' liegen in gleichem Abstand, aber unterschiedlichen Richtungen von der ausgezeichneten Position 38'. Befindet sich das Stellteil 13 nach Beendigung der Betätigung des Kippschalters 24 durch den Bediener in dem Bereich 35', so bewegt die signalverarbeitende Anordnung das Stellteil 13 selbsttätig in die ausgezeichnete Position 38'. In diesem Fall erfolgt die Bewegung in die ausgezeichnete Position 38' unabhängig davon, welche Richtung die vorangegangene Verstellbewegung des Stellteils 13 hatte. Die ausgezeichnete Position 38' kann beispielsweise so festgelegt sein, daß die Stellung des Schiebedachs in dieser Position aerodynamisch besonders günstig ist oder daß bei der Fahrt entstehende Windgeräusche besonders gedämpft sind. Denkbar ist jedoch auch, daß die ausgezeichnete Position 38' und/oder der Bereich 35' um die ausgezeichnete Position vom Fahrer vorgebbar ist.

Ein weiteres Ausführungsbeispiel ist in der Figur 2 dargestellt. Ein elektromotorischer Antrieb bewegt ein Kfz-Hebedach 113 zwischen einer Schließstellung 115 und einer Belüftungsstellung 116. Antrieb, signalverarbeitende Anordnung und Bedienvorrichtung zu dem Kfz-Hebedach sind wie in der Figur 1 ausgestaltet und deshalb nicht mehr näher dargestellt. Die Endlage 115 ist als ausgezeichnete Position 138 in dem Speicher der signalverarbeitenden Anordnung niedergelegt. Um die ausgezeichnete Position 138 ist ein Bereich 135 vorgesehen, dessen untere Grenze 136 mit der ausgezeichneten Position 138 zusammenfällt und dessen obere Grenze 137 einem Abstand des Hebedachs 113 von der ausgezeichneten Position 138 entspricht. Befindet sich das Stellteil 113 nach Abschluß einer Verstellbewegung in dem Bereich 135, bewegt der Antrieb das Stellteil selbsttätig in die ausgezeichnete Position 138. Diese selbsttätige Bewegung erfolgt unabhängig von der Richtung der vorhergehenden Verstellbewegung. Auch hier ist die Größe des Bereichs 135 so gewählt, daß das Einklemmen eines Körperteils einer Person im Fahrzeug ausgeschlossen ist.

## Patentansprüche

1. Elektromotorischer Antrieb für ein Kraftfahrzeug-Stellteil, das zwischen wenigstens zwei Endlagen (15, 16, 115, 116) bewegbar ist, wobei ein Fangbereich (35, 35', 135) um wenigstens eine ausgezeichnete Position (38, 38', 138) des Stellteils (13, 113) festgelegt ist, und daß der Antrieb (10) das Stellteil (13, 113) so lange selbsttätig ansteuert, bis das Stellteil (13, 113) die ausgezeichnete Position (38, 38', 1 38) angenommen hat, wenn sich das Kraftfahrzeug-Stellteil (13, 113) in dem festgelegten Fangbereich (35, 35', 135) befindet, wobei der Antrieb (10) das Stellteil (13, 113) im festgelegten Fangbereich (35, 35', 135) dann selbsttätig in die ausgezeichnete Position (38, 38', 138) bewegt, wenn keine Stellbefehle für das Stellteil (13, 113) vorliegen, wobei während der Bewegung des Stellteils (13, 113) aufgrund von Stellbefehlen, die beispielsweise von einer Bedienperson erteilt werden, der Fangmechanismus außer Kraft ist.

2. Elektromotorischer Antrieb nach Anspruch 1, **dadurch gekennzeichnet, daß** die selbsttätige Bewegung des Kraftfahrzeug-Stellteils (13, 113) in die ausgezeichnete Position (38, 38', 138) von der Bewegungsrichtung des Kraftfahrzeug-Stellteils (13, 113) vor Erreichen des Bereichs (35, 35', 135) abhängig ist.

3. Elektromotorischer Antrieb nach einem der vorhergehenden Ansprüche, **dadurch gekennzeichnet, daß** die ausgezeichnete Position (38, 138) eine Endlage (15, 16, 115) des Stellteils (13, 113) ist.

4. Elektromotorischer Antrieb nach Anspruch 3, **dadurch gekennzeichnet, daß** das Stellteil (13, 113) wenigstens eine Öffnung des Kraftfahrzeuges wahlweise freigibt oder schließt und die Endlage (15, 115) eine Schließstellung des Stellteils (13, 113) ist.

5. Elektromotorischer Antrieb nach Anspruch 2, **dadurch gekennzeichnet, daß** die ausgezeichnete Position (38') eine Belüftungsstellung des Stellteils ist.

6. Elektromotorischer Antrieb nach einem der vorhergehenden Ansprüche, **dadurch gekennzeichnet, daß** der festgelegte Bereich (35, 35', 135) um die ausgezeichnete Position (38, 38', 138) so gewählt ist, daß ein Einklemmen eines Körperteiles bei der selbsttätigen Bewegung durch den Antrieb (10) ausgeschlossen ist.

7. Elektromotorischer Antrieb nach Anspruch 6, **gekennzeichnet durch** eine Vorrichtung (18), die den Antrieb (10) außerhalb des Bereichs (35, 135) um die ausgezeichnete Position (38, 138) im Fall des Einklemmens von Körperteilen oder Gegenständen anhält oder reversiert, und die Verstellung innerhalb des Bereichs (35, 135) zuläßt.

8. Elektromotorischer Antrieb nach einem der vorhergehenden Ansprüche, **dadurch gekennzeichnet, daß** eine Eingabevorrichtung (24) Stellbefehle an eine signalverarbeitende Anordnung (18) weitergibt, daß Sensormittel (17) zur Bestimmung der Position des Stellteils (13, 113) vorgesehen sind, und daß die signalverarbeitende Anordnung (18) den Antrieb (10) in Abhängigkeit von Signalen der Sensormittel (17) steuert und/oder regelt.

9. Elektromotorischer Antrieb nach Anspruch 8, **dadurch gekennzeichnet, daß** der Elektromotor des Antriebs (10) wenigstens einen Drehzahlsensor (17) aufweist.

10. Elektromotorischer Antrieb nach Anspruch 9, **gekennzeichnet durch** Hallsensoren (17) als Drehzahlsensoren.

11. Elektromotorischer Antrieb nach einem der vorhergehenden Ansprüche, **dadurch gekennzeichnet, daß** die ausgezeichnete Position (38') und/oder der festgelegte Bereich (35') einstellbar ist/sind.

12. Elektromotorischer Antrieb nach einem der vorhergehenden Ansprüche, **gekennzeichnet durch** ein Schiebe-Hebedach (13, 113) oder Fenster (13) als Kraftfahrzeug-Stellteil.

## Claims

1. Electric motor drive for a motor-vehicle adjusting part which can be moved at least between two end positions (15, 16, 115, 116), wherein an intercepting region (35, 35', 135) is defined around at least one marked position (38, 38', 138) of the adjusting part (13, 113), and in that the drive (10) automatically drives the adjusting part (13, 113) until the adjusting part (13, 113) has assumed the marked position (38, 38', 138), if the motor-vehicle adjusting part (13, 113) is in the defined intercepting region (35, 35', 135), wherein the drive (10) moves the adjusting part (13, 113) in the defined intercepting region (35, 35', 135) automatically into the marked position (38, 38', 138) if there are no adjusting commands for the adjusting part (13, 113), and wherein, during the movement of the adjusting part (13, 113) on the basis of adjusting commands given, for example, by an operator, the intercepting mechanism is ineffective.

2. Electric motor drive according to Claim 1, **characterized in that** the automatic movement of the motor-vehicle adjusting part (13, 113) into the marked position (38, 38', 138) is dependent on the direction of movement of the motor-vehicle adjusting part (13, 113) before reaching the region (35, 35', 135).

3. Electric motor drive according to one of the preceding claims, **characterized in that** the marked position (38, 138) is an end position (15, 16, 115) of the adjusting part (13, 113).

4. Electric motor drive according to Claim 3, **characterized in that** the adjusting part (13, 113) either opens or closes at least one opening of the motor vehicle, and the end position (15, 115) is a closed position of the adjusting part (13, 113).

5. Electric motor drive according to Claim 2, **characterized in that** the marked position (38') is a ventilation position of the adjusting part.

6. Electric motor drive according to one of the preceding claims, **characterized in that** the defined region (35, 35', 135) around the marked position (38, 38', 138) is selected in such a manner that a pinching of a body part during the automatic movement by the drive (10) is ruled out.

7. Electric motor drive according to Claim 6, **characterized by** a device (18) which stops or reverses the drive (10) outside the region (35, 135) around the marked position (38, 138) in the event of body parts or objects being pinched, and permits the adjustment within the region (35, 135).

8. Electric motor drive according to one of the preceding claims, **characterized in that** an input device (24) passes on adjusting commands to a signalprocessing arrangement (18), **in that** sensor means (17) are provided for determining the position of the adjusting part (13, 113), and **in that** the signalprocessing arrangement (18) controls and/or regulates the drive (10) as a function of signals of the sensor means (17).

9. Electric motor drive according to Claim 8, **characterized in that** the electric motor of the drive (10) has at least one rotational-speed sensor (17).

10. Electric motor drive according to Claim 9, **characterized by** Hall sensors (17) as rotational-speed sensors.

11. Electric motor drive according to one of the preceding claims, **characterized in that** the marked position (38') and/or the defined region (35') can be adjusted.

12. Electric motor drive according to one of the preceding claims, **characterized by** a tilt-and-slide roof (13, 113) or window (13) as motor-vehicle adjusting part.

## Revendications

1. Système d'entraînement à moteur électrique pour un organe de commande de véhicule automobile mobile entre au moins deux positions extrêmes (15, 16, 115, 116), une plage de capture (35, 35', 135) étant déterminée autour d'au moins une position spécifique (38, 38', 138) de l'organe de commande (13, 113) et le système d'entraînement (10) commandant l'organe de commande (13, 113) automatiquement tant que l'organe de commande (13, 113) n'a pas adopté la position spécifique (38, 38', 138) lorsque l'organe de commande de véhicule automobile (13, 113) se trouve dans la plage de capture déterminée (35, 35', 135), le système d'entraînement (10) déplaçant alors automatiquement en position spécifique (38, 38', 138) l'organe de commande (13, 113) dans la plage de capture déterminée (35, 35', 135) lorsqu'aucune commande de positionnement n'existe pour l'organe de commande (13, 113), le mécanisme de capture étant hors fonctionnement pendant le déplacement de l'organe de commande (13, 113), sur la base de commandes de positionnement qui sont délivrées par exemple par un opérateur.

2. Système d'entraînement à moteur électrique selon la revendication 1, **caractérisé en ce que** le mouvement automatique de l'organe de commande de véhicule automobile (13, 113) dans la position spécifique (38, 38', 138) dépend de la direction de mouvement de l'organe de commande de véhicule automobile (13, 113) avant d'avoir atteint la plage (35, 35', 135).

3. Système d'entraînement à moteur électrique selon l'une quelconque des revendications précédentes, **caractérisé en ce que** la position spécifique (38, 138) est une position extrême (15, 16, 115) de l'organe de commande (13, 113).

4. Système d'entraînement à moteur électrique selon la revendication 3, **caractérisé en ce que** l'organe de commande (13, 113) bloque ou débloque au choix au moins une ouverture du véhicule automobile et la position extrême (15, 115) est une position de fermeture de l'organe de commande (13, 113).

5. Système d'entraînement à moteur électrique selon la revendication 2, **caractérisé en ce que** la position spécifique (38') est une position d'aération de l'organe de commande.

6. Système d'entraînement à moteur électrique selon l'une quelconque des revendications précédentes, **caractérisé en ce que** la plage déterminée (35, 35', 135) est choisie autour de la position spécifique (38, 38', 138) de manière à ce qu'un pincement d'une partie du corps soit exclu lors du mouvement automatique par le système d'entraînement (10).

7. Système d'entraînement à moteur électrique selon la revendication 6, **caractérisé par** un dispositif (18) qui arrête ou inverse le système d'entraînement (10) en dehors de la plage (35, 135) autour de la position spécifique (38, 138) en cas de pincement de parties du corps ou d'objets et permet le réglage dans la plage (35, 135).

8. Système d'entraînement à moteur électrique selon l'une quelconque des revendications précédentes, **caractérisé en ce qu'**un dispositif de saisie (24) transmet des commandes de positionnement à un dispositif de traitement des signaux (18), **en ce que** des moyens de capteur (17) sont prévus pour déterminer la position de l'organe de commande (13, 113), et **en ce que** le dispositif de traitement des signaux (18) commande et/ou régule le système d'entraînement (10) en fonction des signaux des moyens de capteur (17).

9. Système d'entraînement à moteur électrique selon la revendication 8, **caractérisé en ce que** le moteur électrique du système d'entraînement (10) comporte au moins un capteur de régime (17).

10. Système d'entraînement à moteur électrique selon la revendication 9, **caractérisé par** des capteurs à effet Hall (17) servant de capteurs de régime.

11. Système d'entraînement à moteur électrique selon l'une quelconque des revendications précédentes, **caractérisé en ce que** la position spécifique (38') et/ou la plage déterminée (35') peut/peuvent être réglée(s).

12. Système d'entraînement à moteur électrique selon l'une quelconque des revendications précédentes, **caractérisé par** un toit ouvrant (13, 113) ou une fenêtre (13) servant d'organe de commande de véhicule automobile.
